Europäisches Patentamt

(19) European Patent Office

Office européen des brevets

(11) Publication number : **0 459 952 A2**

(12) # EUROPEAN PATENT APPLICATION

(21) Application number : **91810398.7**

(22) Date of filing : **27.05.91**

(51) Int. Cl.⁵ : **A23L 1/236**, A23G 3/30, A23G 3/00

(30) Priority : **01.06.90 US 533181**

(43) Date of publication of application :
**04.12.91 Bulletin 91/49**

(84) Designated Contracting States :
**BE CH DE DK ES FR GB GR IT LI NL SE**

(71) Applicant : **WARNER-LAMBERT COMPANY**
**201 Tabor Road**
**Morris Plains New Jersey 07950 (US)**

(72) Inventor : **Cherukuri, Subraman Rao**
**10 Jean Drive**
**Towaco, New Jersey 07082 (US)**
Inventor : **Raman, Krishna P.**
**No.5 Marre Drive**
**Randolph, New Jersey 07869 (US)**
Inventor : **Faust, Steven M.**
**4-51 Audubon Court**
**Stanhope, New Jersey 07874 (US)**

(74) Representative : **Silbiger, Jakob, Dr.**
**c/o CAPSUGEL AG Fabrikmattenweg 2-4**
**CH-4144 Arlesheim (CH)**

(54) **Synergistic sweetening compositions containing xylitol and acesulfame-k and methods for preparing same.**

(57) The present invention pertains to synergistic sweetening compositions which comprise xylitol and an effective amount of the potassium salt of 6-methyl-1,2,3-oxathiazin-4(3H)-one 2,2-dioxide. The synergistic sweetening compositions may be used in a wide variety of ingestible products such as chewing gum compositions, hard and soft confections, beverages, and the like. The present invention also pertains to methods for preparing the synergistic sweetening compositions and the ingestible products in which they may be used.

EP 0 459 952 A2

This invention pertains to synergistic sweetening compositions which comprise xylitol and the potassium salt of 6-methyl-1,2,3,-oxathiazin-4(3H)-one2,2-dioxide(Acesulfame-K). The synergistic sweetening compositions may be utilized in a wide variety of ingestible compositions. This invention also pertains to methods for preparing the synergistic sweetening compositions and the ingestible compositions in which they may be employed.

Bulk sweetening agents and intense sweetening agents are well known in the art and are widely used as substitutes for sugar in many low calorie and noncariogenic compositions.

Bulk sweetening agents (bulk sweeteners) include monosaccharides, disaccharides, polysaccharides, sugar alcohols, isomalt (a racemic mixture of alpha-D-glucopyranosyl-1,6-mannitol and alpha-D-glucopyranosyl-1,6-sorbitol manufactured under the tradename Palatinit by Suddeutsche Zucker), maltodextrins, hydrogenated starch hydrolysates, hydrogenated hexoses, and hydrogenated disaccharides.

Intense sweetening agents (sweeteners) are natural or synthetic compounds which have a greater sweetening intensity, and usually a lower caloric value, than that of sugar (sucrose). Because intense sweetening agents have greater sweetening properties than sugar, smaller amounts of the sweetening agents provide sweetening intensity equivalent to larger amounts of sugar.

Intense sweetening agents have a wide range of chemically distinct structures and hence possess varying properties. These intense sweetener compounds include water-soluble artificial sweetening agents such as 1,2-benzisothiazol-3(2H)-one 1,1-dioxide (saccharin and its salts), cyclohexylsulfamic acid (cyclamate and its salts), and the potassium salt of 6-methyl-1,2,3-oxathiazin-4(3H)-one-2,2-dioxide (Acesulfame-K, a commercially available product from Hoechst Celanese Corporation, Somerville, New Jersey); proteins such as thaumatin (Talin, a commercially available product of Tate & Lyle Products, Reading, United Kingdom); chlorodeoxysugar derivatives (such as Sucralose, a commercially available product of McNeil Specialty Products Company, Skillman, New Jersey); and dipeptides such as N-L-alpha-aspartyl-L-phenylalanine 1-methyl ester (Aspartame, a commercially available product of the Nutrasweet Company, Deerfield, Illinois) and L-alpha-aspartyl-D-alanine N-(2,2,4,4-tetramethyl-3-thietanyl)amide (Alitame, a commercially available product of Pfizer, New York, New York); and dihydrochalcones. Each of these sweetening agents has a distinct sweetening intensity compared to sucrose and this sweetening intensity is well documented. For example, the following sweetening agents have the sweetening intensities set out below.

## Sweetness Intensities of Various Sweetening Agents

| SWEETENING AGENT | SWEETNESS INTENSITY[*] |
|---|---|
| 1, 2-Benzisothiazol-3(2H)-one 1, 1-dioxide (Saccharin and its salts) | 300X |
| Cyclohexylsulfamic acid (Cyclamate and its salts) | 30X |
| N-L-alpha-Aspartyl-L-phenylalanine 1-methyl ester (Aspartame) | 180X-200X |
| Potassium salt of 6-methyl-1,2,3-oxathiazin-4(3H)-one-2,2-dioxide (Acesulfame-K) | 160X-200X |
| 4,1',6'-Trichloro-4,1',6'-trideoxy-galactosucrose (Sucralose) | 600X |
| L-alpha-Aspartyl-N-(2,2,4,4-tetramethyl-3-thietanyl)-D-alaninamide hydrate (Alitame) | 2000X |

[*] Compared to sucrose.

Because each intense sweetening agent is chemically distinct, each sweetening agent presents a different challenge with respect to the actual use of such sweetening agent in ingestible compositions. For example, some intense sweetening agents present stability problems, such as Aspartame, which exhibits instability in the presence of aldehydes, ketones, moisture, and the like. Other intense sweetening agents have an associated bitter taste or off-note such as Saccharin (a commercially available product of PMC Specialty Group Inc., Cincinnati, Ohio), stevioside, Acesulfame-K, glycyrrhizin, dipotassium glycyrrhizin, glycyrrhizic acid ammonium salt, and thaumatin (Talin).

Many sweetening agent combinations are known which help to overcome these stability and taste problems and which possess synergistic sweetening properties. United States patent no. 4,495,170, issued to Beytes et al. and assigned to Tate and Lyle plc, discloses synergistic sweetening compositions which comprise a mixture of a chlorodeoxysugar and another sweetening agent which has an associated bitter taste. The chlorodeoxysugars are selected from the group consisting of chlorodeoxysucroses and chlorodeoxygalacto-sucroses. The bitter tasting sweetening agent is selected from the group consisting of Saccharin, stevioside and Acesulfame-K.

United States patent application serial no. 264,248, filed October 28, 1988, to Cherukuri et al. and assigned to Warner-Lambert Company, discloses synergistic sweetening compositions which comprise Sucralose and Maltitol.

PCT patent application serial no. WO 89/03182A, priority date October 6, 1987, to Tate & Lyle plc, discloses synergistic sweetening compositions which comprise Sucralose and a saccharide bulk sweetening agent selected from the group consisting of fructose, glucose, maltose, xylitol, mannitol, and sorbitol.

United States patent no. 4,872,884, issued to Cherukuri et al. and assigned to Warner-Lambert Company, discloses reduced calorie chewing gums wherein soft polyvinyl acetate containing gum bases having an enhanced hydrophilic nature are employed in amounts of greater than about 50% in combination with up to about 0.60% of an intense sweetening agent and up to about 40% of a bulk sweetening agent. The gum bases are employed in major quantities to reduce the caloric content of the gums.

United States patent no. 4,284,650, issued to Goupil, discloses a chewing gum composition which comprises a mixture of xylitol and sorbose present in a ratio by weight from about 1:10 to about 10:1.

United States patent no. 4,217,368, issued to Witzel et al. and assigned to Life Savers, Inc., discloses a chewing gum composition which comprises a first sweetening agent in a water-soluble phase and a second sweetening agent in a water-insoluble phase. The first sweetening agent and second sweetening agent may be selected from a group which includes sucrose and xylitol.

United States patent no. 4,279,931, issued to Hopkins et al., disclose a chewing gum composition which comprises a combination of a hydrogenated starch hydrolysate and sorbitol and optionally other sweetening agents which include sucrose and xylitol.

United States patent no. 4,065,578, issued to Reggio et al. and assigned to Life Savers, Inc., discloses a chewing gum comprising xylitol as the bulk sweetening agent and a hydrocolloid as a binder and humectant.

United States patent Re. 30,197, issued to Klose et al. and assigned to General Foods Corporation, discloses a chewing gum comprising a gum base, a sweetening agent, a flavoring agent, and xylitol present in an amount less than 10% by weight of the composition.

United States patent no. 3,899,593, issued to Hammond et al. and assigned to General Foods Corporation, discloses a sugarless chewing gum comprising a gum base, a sweetening agent, a flavoring agent, and xylitol.

PCT application no. PCT/US89/00074, filed January 9, 1989, to Wm. Wrigley Jr. Company, discloses a chewing gum employing xylitol as a rolling or dusting compound.

Thus, combinations of intense sweetening agents and bulk sweetening agents are known which have specific sweetness intensities compared to sucrose. There is still a need, however, for sweetening compositions which have enhanced sweetening intensities for use in ingestible compositions. Such enhanced or synergistic sweetening compositions would permit an ingestible composition to contain a reduced total amount of sweetening composition, and would thereby reduce costs, stability problems, taste problems, and the like. The present invention provides such synergistic sweetening compositions having enhanced sweetness and taste intensity and the sweetened ingestible compositions in which the synergistic sweetening compositions may be used.

The present invention pertains to synergistic sweetening compositions which comprise xylitol and an effective amount of the potassium salt of 6-methyl-1,2,3-oxathiazin-4(3H)-one 2,2-dioxide. The synergistic sweetening compositions may be used in a wide variety of ingestible products such as chewing gum compositions, hard and soft confections, beverages, and the like. The present invention also pertains to methods for preparing the synergistic sweetening compositions and the ingestible products in which they may be used.

FIGURE 1 depicts in graphic format the sweetness intensities found for xylitol with various intense sweetening agents at equivalent sweetness levels in chewing gum compositions at different chew out times (Examples 16-19).

FIGURE 2 depicts in graphic format the sweetness intensities found for sorbitol with various intense sweetening agents at equivalent sweetness levels in chewing gum compositions at different chew out times (Examples 20-23).

FIGURE 3 depicts in graphic format the sweetness intensities found for xylitol and sorbitol with various intense sweetening agents at equivalent sweetness levels in chewing gum compositions at different chew out times after the sweetness intensity of the bulk sweetening agent has been subtracted (Examples 18, 19, 22, and 23).

Applicants define the terms "ingestible" and "edible" to include all materials and compositions which are used by or which perform a function in the body. These include materials and compositions which are adsorbed and those which are not absorbed as well as those which are digestible and non-digestible.

Applicants have found that the combination of xylitol and the potassium salt of 6-methyl-1,2,3-oxathiazin-4(3H)-one 2,2-dioxide (Acesulfame-K) results in a synergistic sweetening composition having enhanced sweetness and taste both in solution and in edible compositions. The sweetening intensity effect of the synergistic sweetening composition is markedly greater than that expected by mere addition of the intense sweetening agent and the bulk sweetening agent. Accordingly, applicants' synergistic sweetening compositions have the advantage of requiring lower amounts of sweetening agent to adequately sweeten an ingestible composition.

The bulk sweetening agent in the present invention is xylitol (xylo-pentane-1, 2, 3, 4, 5-pentol). Xylitol is a non-cariogenic sugar alcohol which has a clean, sugar-like sweetness with a fresh, cool taste. The relative sweetness of xylitol is equal to sucrose. Xylitol is a pentitol derivative prepared by the reduction of xylose, a sugar found in fruits, cereals, and vegetables.

The intense sweetening agent of the present invention is the potassium salt of 6-methyl-1,2,3,-oxathiazin-4(3H)-one 2,2-dioxide which is commercially available as Acesulfame-K from Hoechst Celanese Corporation, Somerville, New Jersey. Acesulfame-K is an artificial, non-nutritive, non-dipeptide, intense sweetening agent which is very soluble in water and soluble in alcohol and mixtures of glycerin and water. The relative sweetness of Acesulfame-K is 160 to 200 times greater than that of sucrose.

The intense sweetening agent of the present invention may be used in many distinct physical forms well known in the art to provide an initial burst of sweetness and/or a prolonged sensation of sweetness. Without being limited thereto, such physical forms include free forms, such as spray dried, powdered, and beaded forms, and encapsulated forms, and mixtures thereof.

The amount of Acesulfame-K in the inventive synergistic sweetening composition is an effective amount to sweeten the synergistic sweetening composition. An effective amount of Acesulfame-K is a matter of preference, subject to such factors as the strength of sweetness desired. Thus, the exact amount of Acesulfame-K may be varied in order to obtain the result desired in the final product and such variations are within the capabilities of those skilled in the art without the need for undue experimentation. In a preferred embodiment, the synergistic sweetening composition of the present invention comprises xylitol and Acesulfame-K wherein Acesulfame-K is present in an amount from about 0.001% to about 20%, preferably from about 0.01% to about 15%, and more preferably from about 0.1% to about 10%, by weight of the synergistic sweetening composition.

The synergistic sweetening compositions of the present invention are prepared by admixing xylitol and an effective amount of Acesulfame-K.

Once prepared, the inventive synergistic sweetening composition may be stored for future use or may be formulated in effective amounts with conventional additives, such as pharmaceutically acceptable carriers or confectionery ingredients to prepare a wide variety of ingestible compositions, such as foodstuffs, beverages, powdered drinks, jellies, extracts, hard and soft confectionery products, tabletop sweetening agents, orally administered pharmaceutical compositions, and hygienic products such as toothpastes, dental lotions, mouth washes and chewing gums.

The amount of the inventive synergistic sweetening composition employed in an edible composition is an effective amount to sweeten the edible composition. An effective amount of the synergistic sweetening composition is a matter of preference, subject to such factors as the type of carrier employed in the composition, the other ingredients in the composition, and the strength of sweetness desired. Thus, the exact amount of sweetening agent composition may be varied in order to obtain the result desired in the final product and such variations are within the capabilities of those skilled in the art without the need for undue experimentation. In general, the amount of synergistic sweetening composition normally present in an edible composition will be from about 1% to about 80%, preferably from about 5% to about 30%, and more preferably from about 15% to about 25%, by weight of the edible composition.

The present invention extends to methods of making the ingestible compositions. In such a method, a composition is made by admixing an effective amount of the synergistic sweetening composition of the present invention with a pharmaceutically acceptable carrier or confectionery material and the other ingredients of the desired ingestible composition. Other ingredients will usually be incorporated into the composition as dictated by the nature of the desired composition as well known by those having ordinary skill in the art. The ultimate ingestible compositions are readily prepared using methods generally known in the food technology and pharmaceutical arts.

In another embodiment, the present invention is directed at a method for sweetening an edible composition which comprises admixing an effective amount of a synergistic sweetening composition with the edible composition wherein the synergistic sweetening composition comprises xylitol and Acesulfame-K.

An important aspect of the present invention includes an improved chewing gum composition incorporating the inventive synergistic sweetening composition and a method for preparing the chewing gum composition, including both chewing gum and bubble gum formulations. In general, the improved chewing gum compositions will contain a gum base, an effective amount of the inventive synergistic sweetening composition, and various additives such as a flavoring agent.

The chewing gum compositions may be reduced-calorie chewing gums employing high levels of a chewing gum base having an enhanced hydrophilic character. These reduced-calorie chewing gums will comprise a gum base present in an amount from about 50% to about 85%, preferably from about 50% to about 75%, and more preferably from about 60% to about 70%, by weight of the chewing gum composition. When a reduced-calorie product is not desired, the chewing gum composition may contain lower amounts of a chewing gum base. These chewing gums will comprise a gum base present in an amount up to about 55%, preferably from about 15% to about 40%, and more preferably from about 20% to about 35%, by weight of the chewing gum composition.

As used herein, the term "reduced-calorie composition" means a composition having a caloric value two thirds or less than that of a conventional composition. The term "tight" or "rubbery" chew refers to a chewing gum composition which requires a large amount of muscular chewing effort to masticate or to a composition which provides a gum bolus with high elasticity and bounce and which is difficult to deform.

Gum bases having an enhanced hydrophilic character include polyvinyl acetate gum bases which may also contain a low melting point wax. Such gum bases do not require a high level of bulking agent to plasticize the gum base and render it soft during chewing. These gum bases may be used at higher than normal levels in chewing gum compositions in place of a bulking and/or a bulk sweetening agent to prepare high base-low bulking agent reduced-calorie gums which do not have rubbery or tight chew characteristics. These gum bases possess increased hydrophilic properties over conventional gum bases and appear to increase in size during chewing releasing flavoring and sweetening agents which would normally be entrapped in the gum base while maintaining a soft chew texture. Reduced-calorie chewing gum compositions prepared with such gum bases in high levels are less hygroscopic (have lower moisture-pickup) and are less prone to becoming stale than conventional reduced-calorie gum compositions while having comparable firmness and texture.

In one embodiment, the reduced-calorie chewing gum composition comprises a gum base having an enhanced hydrophilic character present in an amount from about 40% to about 75%, by weight of the chewing gum composition, wherein the gum base comprises (a) an elastomer present in an amount from about 0.5% to about 20%, by weight of the gum base, (b) a medium molecular weight polyvinyl acetate polymer having a molecular weight from about 35,000 to about 55,000 present in an amount from about 10% to about 25%, by weight of the gum base, (c) an acetylated monoglyceride present in an amount from about 4.5% to about 10%, by weight of the gum base, (d) a wax having a melting point below about 60° C. present in an amount from about 6% to about 10%, by weight of the gum base, and (e) a material selected from the group consisting of elastomer solvents, emulsifiers, plasticizers, fillers, and mixtures thereof, present in an amount to bring the total amount of gum base to 100%, by weight of the gum base.

The elastomers (rubbers) employed in the gum base will vary greatly depending upon various factors such as the type of gum base desired, the consistency of gum composition desired and the other components used in the composition to make the final chewing gum product. The elastomer may be any water-insoluble polymer known in the art, and includes those gum polymers utilized for chewing gums and bubble gums. Illustrative examples of suitable polymers in gum bases include both natural and synthetic elastomers. For example, those polymers which are suitable in gum base compositions include, without limitation, natural substances (of vegetable origin) such as chicle, natural rubber, crown gum, nispero, rosidinha, jelutong, perillo, niger gutta, tunu, balata, guttapercha, lechi capsi, sorva, gutta kay, and the like, and mixtures thereof. Examples of synthetic elastomers include, without limitation, styrene-butadiene copolymers (SBR), polyisobutylene, isobutylene-isoprene copolymers, polyethylene, and the like, and mixtures thereof.

The amount of elastomer employed in the gum base will vary greatly depending upon various factors such as the type of gum base used, the consistency of the gum composition desired and the other components used in the composition to make the final chewing gum product. In general, the elastomer will be present in the gum base in an amount from about 0.5% to about 20%, and preferably from about 2.5% to about 15%, by weight of the gum base.

The polyvinyl acetate polymer employed in the gum base is a polyvinyl acetate polymer having a medium molecular weight, specifically, having a mean average molecular weight in the range from about 35,000 to about

5

55,000. This medium molecular weight polyvinyl acetate polymer will preferably have a viscosity from about 35 seconds to about 55 seconds (ASTM designation D1200-82 using a Ford cup viscometer procedure). The medium molecular weight polyvinyl acetate polymer will be present in the gum base in an amount from about 10% to about 25%, and preferably from about 12% to about 27%, by weight of the gum base.

The medium molecular weight polyvinyl acetate polymer may also be blended with a low molecular weight polyvinyl acetate polymer. The low molecular weight polyvinyl acetate polymer will have a mean average molecular weight in the range from about 12,000 to about 16,000. This low molecular weight polyvinyl acetate polymer will preferably have a viscosity from about 14 seconds to about 16 seconds (ASTM designation D1200-82 using a Ford cup viscometer procedure). The low molecular weight polyvinyl acetate polymer will be present in the gum base in an amount up about 17%, and preferably from about 12% to about 17%, by weight of the gum base.

When a low molecular weight polyvinyl acetate polymer is blended with a medium molecular weight polyvinyl acetate polymer, the polymers will be present in a mole ratio from about 1:0.5 to about 1:1.5, respectively.

The medium molecular weight polyvinyl acetate polymer may also be blended with a high molecular weight polyvinyl acetate polymer. The high molecular weight polyvinyl acetate polymer will have a mean average molecular weight in the range from about 65,000 to about 95,000. The high molecular weight polyvinyl acetate polymer will be present in the gum base in an amount up to about 5%, by weight of the gum base.

The acetylated monoglycerides, like the polyvinyl acetate polymer, serve as plasticizing agents. While the saponification value of the acetylated monoglycerides is not critical, preferable saponification values are 278 to 292, 316 to 331, 370 to 380, and 430 to 470. A particularly preferred acetylated monoglyceride has a saponification value above about 400. Such acetylated monoglycerides generally have an acetylation value (percentage acetylated) above about 90 and a hydroxyl value below about 10 (Food Chemical Codex (FCC) III/P508 and the revision of AOCS).

The use of acetylated monoglycerides in the gum base is preferred over the use of bitter polyvinyl acetate (PVA) plasticizers, in particular, triacetin. The acetylated monoglycerides will be present in the gum base in an amount from about 4.5% to about 10%, and preferably from about 5% to about 9%, by weight of the gum base.

The wax in the gum base softens the polymeric elastomer mixture and improves the elasticity of the gum base. The waxes employed will have a melting point below about 60° C., and preferably between about 45° C. and about 55° C. A preferred wax is low melting paraffin wax. The wax will be present in the gum base in an amount from about 6% to about 10%, and preferably from about 7% to about 9.5%, by weight of the gum base.

In addition to the low melting point waxes, waxes having a higher melting point may be used in the gum base in amounts up to about 5%, by weight of the gum base. Such high melting waxes include beeswax, vegetable wax, candelilla wax, carnauba wax, most petroleum waxes, and the like, and mixtures thereof.

In addition to the components set out above, the gum base includes a variety of traditional ingredients, such as a component selected from the group consisting of elastomer solvents, emulsifiers, plasticizers, fillers, and mixtures thereof. These ingredients are present in the gum base in an amount to bring the total amount of gum base to 100%.

The gum base may contain elastomer solvents to aid in softening the elastomer component. Such elastomer solvents may comprise those elastomer solvents known in the art, for example, terpinene resins such as polymers of alpha-pinene or beta-pinene, methyl, glycerol and pentaerythritol esters of rosins and modified rosins and gums, such as hydrogenated, dimerized and polymerized rosins, and mixtures thereof. Examples of elastomer solvents suitable for use herein include the pentaerythritol ester of partially hydrogenated wood and gum rosin, the pentaerythritol ester of wood and gum rosin, the glycerol ester of wood rosin, the glycerol ester of partially dimerized wood and gum rosin, the glycerol ester of polymerized wood and gum rosin, the glycerol ester of tall oil rosin, the glycerol ester of wood and gum rosin and the partially hydrogenated wood and gum rosin and the partially hydrogenated methyl ester of wood and rosin, and the like, and mixtures thereof. The elastomer solvent may be employed in the gum base in amounts from about 2% to about 15%, and preferably from about 7% to about 11%, by weight of the gum base.

The gum base may also include emulsifiers which aid in dispersing the immiscible components into a single stable system. The emulsifiers useful in this invention include glyceryl monostearate, lecithin, fatty acid monoglycerides, diglycerides, propylene glycol monostearate, and the like, and mixtures thereof. A preferred emulsifier is glyceryl monostearate. The emulsifier may be employed in amounts from about 2% to about 15%, and preferably from about 7% to about 11%, by weight of the gum base.

The gum base may also include plasticizers or softeners to provide a variety of desirable textures and consistency properties. Because of the low molecular weight of these ingredients, the plasticizers and softeners are able to penetrate the fundamental structure of the gum base making it plastic and less viscous. Useful plasticizers and softeners include lanolin, palmitic acid, oleic acid, stearic acid, sodium stearate, potassium stearate, glyceryl triacetate, glyceryl lecithin, glyceryl monostearate, propylene glycol monostearate, acetylated monoglyceride, glycerine, and the like, and mixtures thereof. Other waxes, for example, natural and synthetic waxes, hydrogenated vegetable oils, petroleum waxes such as polyurethane waxes, polyethylene waxes, paraffin waxes, microcrystalline waxes, fatty waxes, sorbitan monostearate, tallow, propylene glycol, mixtures thereof, and the like, may also be incorporated into the gum base. The plasticizers and softeners are generally employed in the gum base in amounts up to about 20%, and preferably in amounts from about 9% to about 17%, by weight of the gum base.

Preferred plasticizers are the hydrogenated vegetable oils and include soybean oil and cottonseed oil which may be employed alone or in combination. These plasticizers provide the gum base with good texture and soft chew characteristics. These plasticizers and softeners are generally employed in amounts from about 5% to about 14%, and preferably in amounts from about 5% to about 13.5%, by weight of the gum base.

In another preferred embodiment, the softening agent is anhydrous glycerin, such as the commercially available United States Pharmacopeia (USP) grade. Glycerin is a syrupy liquid with a sweet warm taste and has a sweetness of about 60% of that of cane sugar. Because glycerin is hygroscopic, it is important that the anhydrous glycerin be maintained under anhydrous conditions throughout the preparation of the chewing gum composition.

The gum base may also include effective amounts of mineral adjuvants which serve as fillers and textural agents. Useful mineral adjuvants include calcium carbonate, magnesium carbonate, alumina, aluminum hydroxide, aluminum silicate, talc, tricalcium phosphate, dicalcium phosphate, and the like, and mixtures thereof. These fillers or adjuvants may be used in the gum base compositions in various amounts. Preferably the amount of filler, when used, will be present in an amount from about 15% to about 40%, and preferably from about 20% to about 30%, by weight of the gum base.

A variety of traditional ingredients may be optionally included in the gum base in effective amounts such as coloring agents, antioxidants, preservatives, flavoring agents, and the like. For example, titanium dioxide and other dyes suitable for food, drug and cosmetic applications, known as F. D. & C. dyes, may be utilized. An anti-oxidant such as butylated hydroxytoluene (BHT), butylated hydroxyanisole (BHA), propyl gallate, and mixtures thereof, may also be included. Other conventional chewing gum additives known to one having ordinary skill in the chewing gum art may also be used in the gum base.

The manner in which the gum base components are admixed is not critical and is performed using standard techniques and apparatus known to those skilled in the art. In a typical method, an elastomer is admixed with an elastomer solvent and/or a plasticizer and/or an emulsifier and agitated for a period of from 1 to 30 minutes. After blending is complete, the polyvinyl acetate component is admixed into the mixture. The medium molecular weight polyvinyl acetate is preferably admixed prior to addition of the optional low molecular weight polyvinyl acetate to prevent the creation of pockets of polyvinyl acetate within the elastomer mixture. The remaining ingredients, such as the low melting point wax, are then admixed, either in bulk or incrementally, while the gum base mixture is blended again for 1 to 30 minutes.

Chewing gum compositions employing a high level of a chewing gum base having an enhanced hydrophilic character are more fully described in United States patent no. 4,872,884, which disclosure is incorporated herein by reference.

Other gum bases having an enhanced hydrophilic nature and suitable for use in reduced-calorie chewing gum compositions in high levels may also be employed in the present invention. In general, these gum bases may be employed in amounts up to 99%, preferably from about 40% to about 85%, and more preferably from about 40% to about 75%, by weight of the chewing gum composition. Suitable gum bases having an enhanced hydrophilic nature include, for example, those disclosed in United States patent no. 4,698,223, which disclosure is incorporated herein by reference. The gum base is formulated with the inventive synergistic sweetening composition and conventional additives such as a bulking agent to prepare a wide variety of sweetened chewing gum compositions.

The amount of gum base employed in the chewing gum composition will vary depending on such factors as the type of gum base used, the consistency desired, and the other components used to make the final chewing gum product. In general, the gum base having an enhanced hydrophilic character will be present in the chewing gum composition in an amount from about 50% to about 85%, preferably from about 50% to about 75%, and more preferably from about 60% to about 70%, by weight of the chewing gum composition.

In another embodiment, the invention pertains to a chewing gum composition which contains lower amounts of a chewing gum base. In general, the gum base in these chewing gum compositions will be present in an amount up to about 55%, preferably from about 15% to about 40%, and more preferably from about 20% to about 35%, by weight of the chewing gum composition. In this embodiment, the gum base will comprise an elastomer and a variety of traditional ingredients such as an elastomer solvent, waxes, emulsifiers, plasticizers or softeners, bulking agents such as mineral adjuvants which may serve as fillers and textural agents, coloring agents, antioxidants, preservatives, flavoring agents, and the like, and mixtures thereof. Illustrative examples of these gum base components have been set out above. The preparation of these gum bases is well known in the art.

Once prepared, the gum base may be formulated with the synergistic sweetening composition of the present invention and conventional additives to prepare a wide variety of chewing gum compositions.

In addition to the xylitol bulk sweetening agent employed in the present invention, the chewing gum composition may include other bulking agents. These bulking agents (carriers, extenders) may be water-soluble and include bulking agents selected from the group consisting of, but not limited to, monosaccharides, disaccharides, polysaccharides, other sugar alcohols, and mixtures thereof; isomalt (a racemic mixture of alpha-D-glucopyranosyl-1,6-mannitol and alpha-D-glucopyranosyl-1,6-sorbitol manufactured under the tradename Palatinit by Suddeutsche Zucker), maltodextrins; hydrogenated starch hydrolysates; hydrogenated hexoses; hydrogenated disaccharides; minerals, such as calcium carbonate, talc, titanium dioxide, dicalcium phosphate, celluloses and the and the like, and mixtures thereof. In general, bulking agents may be used in amounts up to about 60%, and preferably in amounts from about 25% to about 60%, by weight of the chewing gum composition.

Suitable sugar bulking agents include monosaccharides, disaccharides and polysaccharides such as xylose, ribulose, glucose (dextrose), mannose, galactose, fructose (levulose), sucrose (sugar), maltose, invert sugar, partially hydrolyzed starch and corn syrup solids, and mixtures thereof. Mixtures of sucrose and corn syrup solids are the preferred sugar bulking agents.

Suitable sugar alcohol bulking agents include sorbitol, xylitol, mannitol, galactitol, maltitol, and mixtures thereof. Mixtures of sorbitol and mannitol are the preferred sugar alcohol bulking agents.

Maltitol is a sweet, non-caloric, water-soluble sugar alcohol useful as a bulking agent in the preparation of non-caloric beverages and foodstuffs and is more fully described in United States patent no. 3,708,396, which disclosure is incorporated herein by reference. Maltitol is made by hydrogenation of maltose which is the most common reducing disaccharide and is found in starch and other natural products.

The gum composition may include effective amounts of conventional additives selected from the group consisting of plasticizers, softeners, emulsifiers, waxes, fillers, mineral adjuvants, flavoring agents (flavors, flavorings), coloring agents (colorants, colorings), antioxidants, acidulants, thickening agents, and the like, and mixtures thereof. These ingredients are present in the chewing gum composition in an amount to bring the total amount of chewing gum composition to 100%. As in the present invention, some of these additives may serve more than one purpose. For example, in sugarless gum compositions, a sweetening agent, such as sorbitol or other sugar alcohol, may also function as a bulking agent.

The plasticizers, softening agents, mineral adjuvants, waxes and antioxidants discussed above, as being suitable for use in the gum base, may also be used in the chewing gum composition. Examples of other conventional additives which may be used include emulsifiers, such as lecithin and glyceryl monostearate, thickening agents, used alone or in combination with other softeners, such as methyl cellulose, alginates, carrageenan, xanthan gum, gelatin, carob, tragacanth, and locust bean, acidulants such as malic acid, adipic acid, citric acid, tartaric acid, fumaric acid, and mixtures thereof, and fillers, such as those discussed above under the category of mineral adjuvants.

The flavoring agents which may be used include those flavors known to the skilled artisan, such as natural and artificial flavors. These flavorings may be chosen from synthetic flavor oils and flavoring aromatics and/or oils, oleoresins and extracts derived from plants, leaves, flowers, fruits, and so forth, and combinations thereof. Nonlimiting representative flavor oils include spearmint oil, cinnamon oil, oil of wintergreen (methyl salicylate), peppermint oil, clove oil, bay oil, anise oil, eucalyptus oil, thyme oil, cedar leaf oil, oil of nutmeg, allspice, oil of sage, mace, oil of bitter almonds, and cassia oil. Also useful flavorings are artificial, natural and synthetic fruit flavors such as vanilla, and citrus oils including lemon, orange, lime, grapefruit, and fruit essences including apple, pear, peach, grape, strawberry, raspberry, cherry, plum, pineapple, apricot and so forth. These flavoring agents may be used in liquid or solid form and may be used individually or in admixture. Commonly used flavors include mints such as peppermint, menthol, artificial vanilla, cinnamon derivatives, and various fruit flavors, whether employed individually or in admixture.

Other useful flavorings include aldehydes and esters such as cinnamyl acetate, cinnamaldehyde, citral diethylacetal, dihydrocarvyl acetate, eugenyl formate, p- methylamisol, and so forth may be used. Generally any flavoring or food additive such as those described in Chemicals Used in Food Processing, publication 1274, pages 63-258, by the National Academy of Sciences, may be used.

Further examples of aldehyde flavorings include but are not limited to acetaldehyde (apple), benzaldehyde (cherry, almond), anisic aldehyde (licorice, anise), cinnamic aldehyde (cinnamon), citral, i.e., alpha-citral (lemon, lime), neral, i.e., beta-citral (lemon, lime), decanal (orange, lemon), ethyl vanillin (vanilla, cream), heliotrope, i.e., piperonal (vanilla, cream), vanillin (vanilla, cream), alpha-amyl cinnamaldehyde (spicy fruity flavors), butyraldehyde (butter, cheese), valeraldehyde (butter, cheese), citronellal (modifies, many types), decanal (citrus fruits), aldehyde C-8 (citrus fruits), aldehyde C-9 (citrus fruits), aldehyde C-12 (citrus fruits), 2-ethyl butyraldehyde (berry fruits), hexenal, i.e., trans-2 (berry fruits), tolyl aldehyde (cherry, almond), veratraldehyde (vanilla), 2,6-dimethyl-5-heptenal, i.e., melonal (melon), 2,6-dimethyloctanal (green fruit), and 2-dodecenal (citrus, mandarin), cherry, grape, strawberry shortcake, mixtures thereof and the like.

The flavoring agent may be employed in either liquid form and/or dried form. When employed in the latter form, suitable drying means such as spray drying the oil may be used. Alternatively, the flavoring agent may be absorbed onto water soluble materials, such as cellulose, starch, sugar, maltodextrin, gum arabic and so forth or may be encapsulated. The actual techniques for preparing such dried forms are well known and do not constitute a part of this invention.

The flavoring agents of the present invention may be used in many distinct physical forms well known in the art to provide an initial burst of flavor and/or a prolonged sensation of flavor. Without being limited thereto, such physical forms include free forms, such as spray dried, powdered, and beaded forms, and encapsulated forms, and mixtures thereof.

Encapsulated delivery systems for flavoring agents or sweetening agents comprise a hydrophobic matrix of fat or wax surrounding a sweetening agent or flavoring agent core. The fats may be selected from any number of conventional materials such as fatty acids, glycerides or polyglycerol esters, sorbitol esters, and mixtures thereof. Examples of fatty acids include hydrogenated and partially hydrogenated vegetable oils such as palm oil, palm kernel oil, peanut oil, rapeseed oil, rice bran oil, soybean oil, cottonseed oil, sunflower oil, safflower oil, and mixtures thereof. Glycerides which are useful include monoglycerides, diglycerides, and triglycerides.

Waxes useful may be chosen from the group consisting of natural and synthetic waxes, and mixtures thereof. Non-limiting examples include paraffin wax, petrolatum, carbowax, microcrystalline wax, beeswax, carnauba wax, candellila wax, lanolin, bayberry wax, sugarcane wax, spermaceti wax, rice bran wax, and mixtures thereof.

The fats and waxes may be used individually or in combination in amounts varying from about 10 to about 70%, and preferably in amounts from about 40 to about 58%, by weight of the encapsulated system. When used in combination, the fat and wax are preferably present in a ratio from about 70:10 to 85:15, respectively.

Typical encapsulated flavoring agent or sweetening agent delivery systems are disclosed in United States patents no. 4,597,970 and 4,722,845, which disclosures are incorporated herein by reference.

The amount of flavoring agent employed herein is normally a matter of preference subject to such factors as the type of final chewing gum composition, the individual flavor, the gum base employed, and the strength of flavor desired. Thus, the amount of flavoring may be varied in order to obtain the result desired in the final product and such variations are within the capabilities of those skilled in the art without the need for undue experimentation. In gum compositions, the flavoring agent is generally present in amounts from about 0.02% to about 5%, and preferably from about 0.1% to about 2%, and more preferably, from about 0.8% to about 1.8%, by weight of the chewing gum composition.

The coloring agents useful in the present invention are used in amounts effective to produce the desired color. These coloring agents include pigments which may be incorporated in amounts up to about 6%, by weight of the gum composition. A preferred pigment, titanium dioxide, may be incorporated in amounts up to about 2%, and preferably less than about 1%, by weight of the gum composition. The colorants may also include natural food colors and dyes suitable for food, drug and cosmetic applications. These colorants are known as F.D.& C. dyes and lakes. The materials acceptable for the foregoing uses are preferably water-soluble. Illustrative nonlimiting examples include the indigoid dye known as F.D.& C. Blue No.2, which is the disodium salt of 5,5-indigotindisulfonic acid. Similarly, the dye known as F.D.& C. Green No.l comprises a triphenylmethanedye and is the monosodium salt of 4-[4-(N-ethyl-p-sulfoniumbenzylamino) diphenylmethylene]-[1-(N-ethyl -N-p-sulfoniumbenzyl)-delta-2,5-cyclohexadieneimine]. A full recitation of all F.D.& C. colorants and their corresponding chemical structures may be found in the Kirk-Othmer Encyclopedia of Chemical Technology, 3rd Edition, in volume 5 at pages 857-884, which text is incorporated herein by reference.

Suitable oils and fats usable in gum compositions include partially hydrogenated vegetable or animal fats, such as coconut oil, palm kernel oil, beef tallow, lard, and the like. These ingredients when used are generally present in amounts up to about 7%, and preferably up to about 3.5%, by weight of the gum composition.

In accordance with this invention, effective amounts of the synergistic sweetening composition of the present invention may be admixed into the chewing gum composition. As set out above, the synergistic sweetening compositions of the present invention comprise xylitol and the potassium salt of 6-methyl-1,2,3-oxathiazin-4(3H)-one 2,2-dioxide. An effective amount of synergistic sweetening composition is normally a matter of preference subject to such factors as the particular type of gum composition being prepared, the type of bulking agent employed, the type of flavor employed and the intensity of sweetness desired. Thus, the exact amount of synergistic sweetening composition may be varied in order to obtain the result desired in the final product and such variations are within the capabilities of those skilled in the art without the need for undue experimentation. In general, the amount of synergistic sweetening composition normally present in a chewing gum composition will be from about 1% to about 50%, preferably from about 5% to about 30%, and more preferably from about 15% to about 25%, by weight of the chewing gum composition.

In a preferred embodiment, the present invention is directed at a sweetened chewing gum composition which comprises:

(a) a gum base;

(b) an effective amount of a synergistic sweetening composition which comprises xylitol and the potassium salt of 6-methyl-1,2,3-oxathiazin-4(3H)-one 2,2-dioxide; and

(c) a flavoring agent.

The present invention also includes a method for preparing the improved chewing gum compositions, including both chewing gum and bubble gum formulations. The chewing gum compositions may be prepared using standard techniques and equipment known to those skilled in the art. The apparatus useful in accordance with the present invention comprises mixing and heating apparatus well known in the chewing gum manufacturing arts, and therefore the selection of the specific apparatus will be apparent to the artisan.

In such a method, a chewing gum composition is made by admixing the gum base with the synergistic sweetening composition and the other ingredients of the final desired chewing gum composition. Other ingredients will usually be incorporated into the composition as dictated by the nature of the desired composition as well known by those having ordinary skill in the art. The ultimate chewing gum compositions are readily prepared using methods generally known in the food technology and chewing gum arts.

For example, the gum base is heated to a temperature sufficiently high to soften the base without adversely effecting the physical and chemical make up of the base. The optimal temperatures utilized may vary depending upon the composition of the gum base used, but such temperatures are readily determined by those skilled in the art without undue experimentation.

The gum base is conventionally melted at temperatures that range from about 60° C. to about 120° C. for a period of time sufficient to render the base molten. For example, the gum base may be heated under these conditions for a period of about thirty minutes just prior to being admixed incrementally with the remaining ingredients of the gum composition such as the inventive sweetening agent composition, plasticizer, the softener, the bulking agent, and/or fillers, coloring agents and flavoring agents to plasticize the blend as well as to modulate the hardness, viscoelasticity and formability of the base. Mixing is continued until a uniform mixture of gum composition is obtained. Thereafter the gum composition mixture may be formed into desirable chewing gum shapes.

Another important aspect of the present invention includes a sweetened confectionery composition which comprises a confectionery bulking agent and an effective amount of the inventive synergistic sweetening composition and a method for preparing the sweetened confectionery compositions. The preparation of confectionery formulations is historically well known and has changed little through the years. Confectionery items have been classified as either "hard" confectionery or "soft" confectionery. The synergistic sweetening compositions of the present invention can be incorporated into the confections by admixing the inventive composition into the conventional hard and soft confections.

Hard confectionery may be processed and formulated by conventional means. In general, a hard confectionery has a base composed of a mixture of sugar and other carbohydrate bulking agents kept in an amorphous or glassy condition. This form is considered a solid syrup of sugars generally having from about 0.5% to about 1.5% moisture. Such materials normally contain up to about 92% corn syrup, up to about 55% sugar and from about 0.1% to about 5% water, by weight of the final composition. The syrup component is generally prepared from corn syrups high in fructose, but may include other materials. Further ingredients such as flavorings, sweetening agents, acidulants, colorants and so forth may also be added.

Such confectionery may be routinely prepared by conventional methods such as those involving fire cookers, vacuum cookers, and scraped-surface cookers also referred to as high speed atmospheric cookers.

Fire cookers involve the traditional method of making a candy base. In this method, the desired quantity of carbohydrate bulking agent is dissolved in water by heating the agent in a kettle until the bulking agent dissolves. Additional bulking agent may then be added and cooking continued until a final temperature of 145° C. to 156° C. is achieved. The batch is then cooled and worked as a plastic-like mass to incorporate additives such as flavors, colorants and the like.

A high-speed atmospheric cooker uses a heat-exchanger surface which involves spreading a film of candy on a heat exchange surface, the candy is heated to 165° C. to 170° C. in a few minutes. The candy is then rapidly cooled to 100° C. to 120° C. and worked as a plastic-like mass enabling incorporation of the additives, such as flavors, colorants and the like.

In vacuum cookers, the carbohydrate bulking agent is boiled to 125° C. to 132° C., vacuum is applied and additional water is boiled off without extra heating. When cooking is complete, the mass is a semi-solid and has a plastic-like consistency. At this point, flavors, colorants, and other additives are admixed in the mass by routine mechanical mixing operations.

The optimum mixing required to uniformly mix the flavors, colorants and other additives during conventional manufacturing of hard confectionery is determined by the time needed to obtain a uniform distribution of the materials. Normally, mixing times of from 4 to 10 minutes have been found to be acceptable.

Once the candy mass has been properly tempered, it may be cut into workable portions or formed into desired shapes. A variety of forming techniques may be utilized depending upon the shape and size of the final product desired. A general discussion of the composition and preparation of hard confections may be found in H.A. Lieberman, Pharmaceutical Dosage Forms: Tablets, Volume 1 (1980), Marcel Dekker, Inc., New York, N.Y. at pages 339 to 469, which disclosure is incorporated herein by reference.

The apparatus useful in accordance with the present invention comprises cooking and mixing apparatus well known in the confectionery manufacturing arts, and therefore the selection of the specific apparatus will be apparent to the artisan.

In contrast, compressed tablet confections contain particular materials and are formed into structures under pressure. These confections generally contain sugars in amounts up to about 95%, by weight of the composition, and typical tablet excipients such as binders and lubricants as well as flavors, colorants and so forth.

Similar to hard confectionery, soft confectionery may be utilized in this invention. The preparation of soft confections, such as nougat, involves conventional methods, such as the combination of two primary components, namely (1) a high boiling syrup such as a corn syrup, or the like, and (2) a relatively light textured frappe, generally prepared from egg albumin, gelatin, vegetable proteins, such as soy derived compounds, sugarless milk derived compounds such as milk proteins, and mixtures thereof. The frappe is generally relatively light, and may, for example, range in density from about 0.5 to about 0.7 grams/cc.

The high boiling syrup, or "bob syrup" of the soft confectionery is relatively viscous and has a higher density than the frappe component, and frequently contains a substantial amount of carbohydrate bulking agent. Conventionally, the final nougat composition is prepared by the addition of the "bob syrup" to the frappe under agitation, to form the basic nougat mixture. Further ingredients such as flavoring, additional carbohydrate bulking agent, colorants, preservatives, medicaments, mixtures thereof and the like may be added thereafter also under agitation. A general discussion of the composition and preparation of nougat confections may be found in B.W. Minifie, Chocolate, Cocoa and Confectionery: Science and Technology, 2nd edition, AVI Publishing Co., Inc., Westport, Conn. (1980), at pages 424-425, which disclosure is incorporated herein by reference.

The procedure for preparing the soft confectionery involves known procedures. In general, the frappe component is prepared first and thereafter the syrup component is slowly added under agitation at a temperature of at least about 65° C., and preferably at least about 100° C. The mixture of components is continued to be mixed to form a uniform mixture, after which the mixture is cooled to a temperature below 80° C., at which point, the flavor may be added. The mixture is further mixed for an additional period until it is ready to be removed and formed into suitable confectionery shapes.

In accordance with this invention, effective amounts of the synergistic sweetening compositions of the present invention may be admixed into the hard and soft confections. As set out above, the synergistic sweetening composition of the present invention comprises xylitol and the potassium salt of 6-methyl-1,2,3-oxathiazin-4(3H)-one 2,2-dioxide. An effective amount of synergistic sweetening composition is normally a matter of preference subject to such factors as the particular type of confection being prepared, the type of bulking agent or carrier employed, the type of flavor employed and the intensity of sweetness desired. Thus, the exact amount of synergistic sweetening composition may be varied in order to obtain the result desired in the final product and such variations are within the capabilities of those skilled in the art without the need for undue experimentation. In general, the amount of synergistic sweetening composition normally present in a hard or soft confection will be from about 1% to about 30%, preferably from about 5% to about 25%, and more preferably from about 10% to about 20%, by weight of the confection.

The present invention extends to methods of making the improved sweetened confections. The synergistic sweetening compositions may be incorporated into an otherwise conventional hard or soft confection composition using standard techniques and equipment known to those skilled in the art. The apparatus useful in accordance with the present invention comprises mixing and heating apparatus well known in the confectionery manufacturing arts, and therefore the selection of the specific apparatus will be apparent to the artisan.

In such a method, a composition is made by admixing the inventive synergistic sweetening composition into the confectionery composition along with the other ingredients of the final desired composition. Other ingredients will usually be incorporated into the composition as dictated by the nature of the desired composition as well known by those having ordinary skill in the art. The ultimate confectionery compositions are readily prepared using methods generally known in the food technology and pharmaceutical arts. Thereafter the confectionery mixture may be formed into desirable confectionery shapes.

The synergistic sweetening compositions may be formulated with conventional ingredients which offer a variety of textures to suit particular applications. Such ingredients may be in the form of hard and soft confections, tablets, toffee, nougat, chewy candy, chewing gum and so forth, both sugar and sugarless. The acceptable ingredients may be selected from a wide range of materials. Without being limited thereto, such materials include diluents, binders and adhesives, lubricants, disintegrants, bulking agents, humectants and buffers and adsorbents. The preparation of such confections and chewing gum products is well known.

The present invention is further illustrated by the following examples which are not intended to limit the effective scope of the claims. All parts and percentages in the examples and throughout the specification and claims are by weight of the final composition unless otherwise specified.

EXAMPLES 1-15

These examples demonstrate a comparison of the sweetness intensities of various intense sweetening agents at equivalent sweetness levels in varying ratios with xylitol in aqueous solution.

Initial stock aqueous solutions of Sodium Saccharin, Acesulfame-K, and Aspartame were prepared to produce equivalent sweetening intensity contributions compared to sucrose on a relative scale of sucrose = 1, Sodium Saccharin = 300X, Acesulfame-K = 160-200X, and Aspartame = 180X-200X. Thus, Sodium Saccharin was prepared as a 0.2666% aqueous solution, Acesulfame-K was prepared as a 0.4% aqueous solution, and Aspartame was prepared as a 0.4% aqueous solution. These stock solutions were then combined in varying ratios with a 50% aqueous solution of xylitol to formulate the test solutions (in percentages by weight) in Examples 1-15 set out in Table 1.

An expert taste panel evaluated the relative sweetness intensities of the solutions of Examples 1-15 (on a scale of 0-100, 0 being not sweet, and 100 being very sweet) in random order and the findings were pooled and averaged. The results from the taste panel are set out in Table 1.

## TABLE 1

### SWEETNESS INTENSITY OF SWEETENING AGENT COMBINATIONS IN AQUEOUS SOLUTION

| EXAMPLE | % Xylitol | % Sweetening Agent | Sweetness Intensity |
|---------|-----------|--------------------|--------------------|
| 1 | 100% | 0% | 65 |
| 2 | 75% | 25% Aspartame | 70 |
| 3 | 50% | 50% Aspartame | 70 |
| 4 | 25% | 75% Aspartame | 70 |
| 5 | 0% | 100% Aspartame | 75 |
| 6 | 100% | 0% | 65 |
| 7 | 75% | 25% Acesulfame-K | 65 |
| 8 | 50% | 50% Acesulfame-K | 80 |
| 9 | 25% | 75% Acesulfame-K | 80 |
| 10 | 0% | 100% Acesulfame-K | 70 |
| 11 | 100% | 0% | 60 |
| 12 | 75% | 25% Saccharin | 65 |
| 13 | 50% | 50% Saccharin | 65 |
| 14 | 25% | 75% Saccharin | 70 |
| 15 | 0% | 100% Saccharin | 75 |

Table 1 shows that the sweetness intensity of the combination of xylitol and Acesulfame-K in Examples 8 and 9 is higher than the expected values. Hence, the solutions of Examples 8 and 9 possess enhanced sweetening intensity, meaning a synergy of sweetness effect exists between xylitol and Acesulfame-K in the ratios set out above.

## EXAMPLES 16-23

These examples demonstrate a comparison of the sweetness intensities of various intense sweetening agents at equivalent sweetness levels in varying ratios with xylitol and sorbitol in chewing gum compositions.

The chewing gum compositions of Examples 16-23 were prepared containing either xylitol or sorbitol as the bulk sweetening agent and either Sodium Saccharin, Acesulfame-K, or Aspartame as the intense sweetening agent. As set out for Examples 1-15, the chewing gum compositions were prepared to produce equivalent sweetness intensities. The compositions of the chewing gums of Examples 16-23 are set out in Tables 2 and 3. The chewing gums compositions were prepared by conventional chewing gum manufacturing techniques.

### TABLE 2

### SWEETENING AGENT COMBINATIONS

### IN CHEWING GUM COMPOSITIONS

| Ingredient | Examples (Percent by Weight) | | | |
|---|---|---|---|---|
| | 16 | 17 | 18 | 19 |
| Gum base | 65.00 | 65.00 | 65.00 | 65.00 |
| Softener | 2.20 | 2.20 | 2.20 | 2.20 |
| Flavor | 2.40 | 2.40 | 2.40 | 2.40 |
| Color | 0.172 | 0.172 | 0.172 | 0.172 |
| Xylitol | 30.228 | 29.928 | 29.928 | 30.028 |
| Aspartame | --- | 0.300 | --- | --- |
| Acesulfame-K | --- | --- | 0.300 | --- |
| Saccharin | --- | --- | --- | 0.200 |

### TABLE 3

### SWEETENING AGENT COMBINATIONS

### IN CHEWING GUM COMPOSITIONS

| Ingredient | Examples (Percent by Weight) | | | |
|---|---|---|---|---|
| | 20 | 21 | 22 | 23 |
| Gum base | 65.00 | 65.00 | 65.00 | 65.00 |
| Softener | 2.20 | 2.20 | 2.20 | 2.20 |
| Flavor | 2.40 | 2.40 | 2.40 | 2.40 |
| Color | 0.172 | 0.172 | 0.172 | 0.172 |
| Sorbitol | 30.228 | 29.928 | 29.928 | 30.028. |
| Aspartame | --- | 0.300 | --- | --- |
| Acesulfame-K | --- | --- | 0.300 | --- |
| Saccharin | --- | --- | --- | 0.200 |

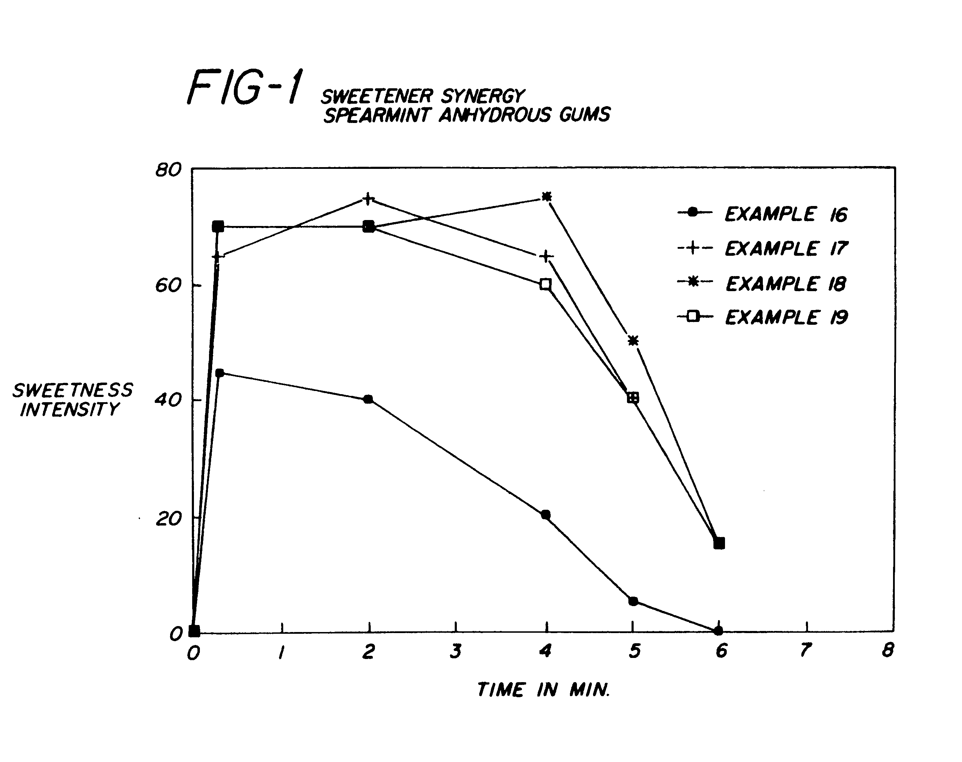

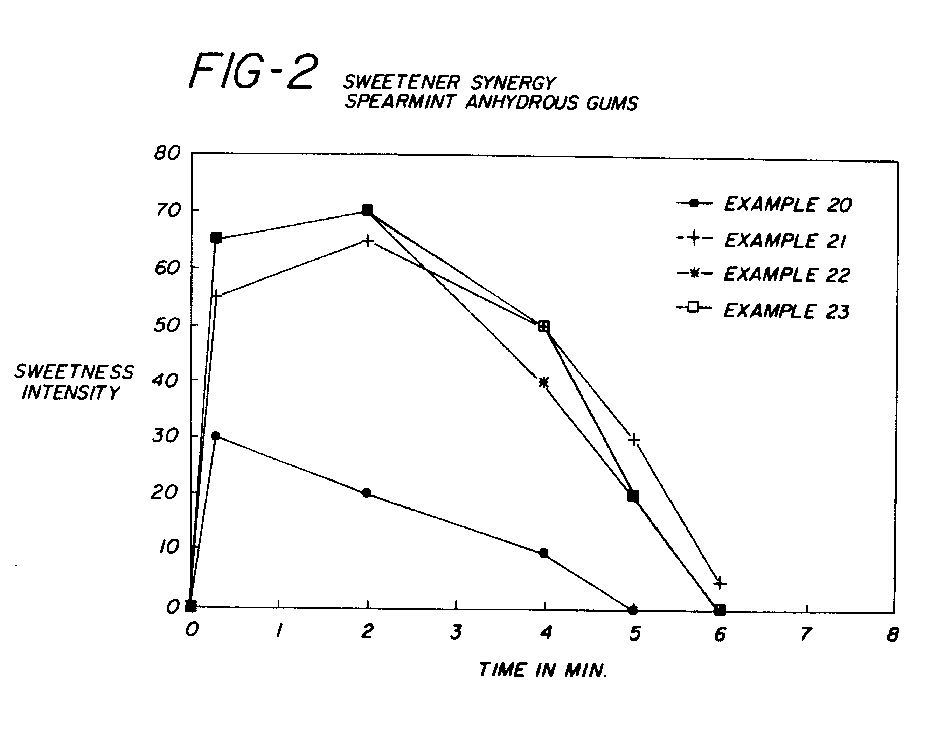

An expert sensory chew panel having experience in the organoleptic evaluation of ingestible products, including chewing gums, evaluated the relative sweetening intensity of the chewing gum compositions of Examples 16- 23, inclusive, at 30 seconds, 2 minutes, 4 minutes, 5 minutes and 6 minutes (on a scale of 0-100, 0 being not sweet, and 100 being very sweet) in random order and the findings were pooled and averaged. The findings are graphically depicted in FIGURES 1 and 2.

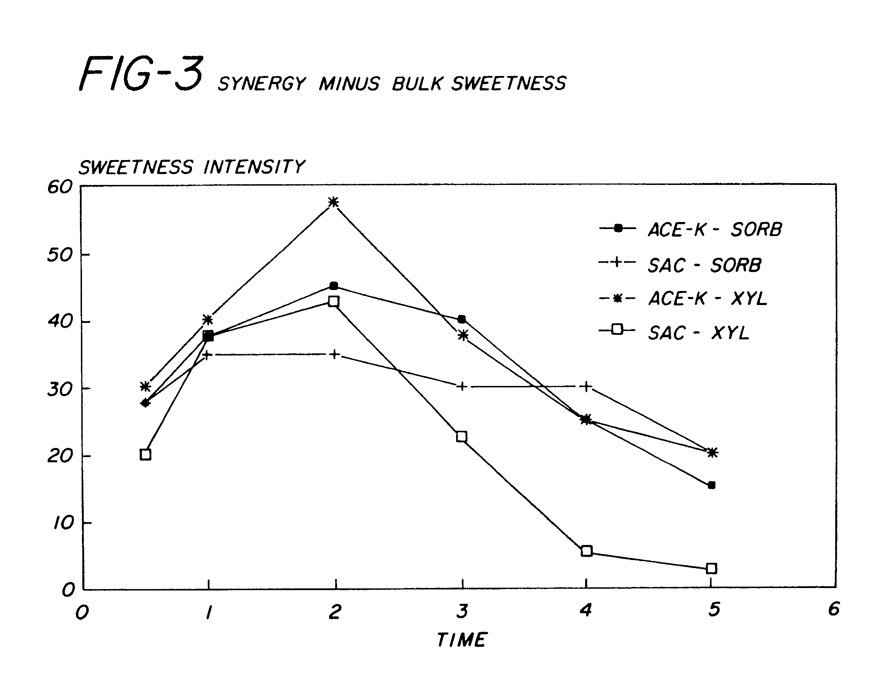

FIGURES 1 and 2 show that the chewing gum composition of Example 18, which contained xylitol and Acesulfame-K was judged to have greater sweetness intensity than the other chewing gum compositions. FIGURE 3 shows the sweetness intensities of the chewing gums of Examples 18, 19, 22, and 23 at different chew out times after the sweetness intensity of the bulk sweetening agent (xylitol or sorbitol) has been subtracted. FIGURE 3 also shows that the chewing gum composition of Example 18, which contained xylitol and Acesulfame-K was judged to have greater sweetness intensity than the other chewing gum compositions. Hence, the chewing gum composition of Example 18 possesses enhanced sweetening intensity, meaning a synergy of sweetness effect exists between xylitol and Acesulfame-K in chewing gum.

The invention described above can be summarized as follows:

1. A synergistic sweetening composition which comprises xylitol and an effective amount of the potassium salt of 6-methyl-1,2,3-oxathiazin-4(3H)-one 2,2-dioxide.

2. The synergistic sweetening composition according to 1, wherein the potassium salt of 6-methyl-1,2,3-oxathiazin-4(3H)-one 2,2-dioxide is present in an amount from about 0.001% to about 20%, by weight of the synergistic sweetening composition.

3. The synergistic sweetening composition according to 2, wherein the potassium salt of 6-methyl-1,2,3-oxathiazin-4(3H)-one 2,2-dioxide is present in an amount from about 0.01% to about 15%, by weight of the synergistic sweetening composition.

4. A sweetened edible composition which comprises a pharmaceutically acceptable carrier and an effective amount of a synergistic sweetening composition wherein the synergistic sweetening composition comprises xylitol and an effective amount of the potassium salt of 6-methyl-1,2,3-oxathiazin-4(3H)-one 2,2-dioxide.

5. The sweetened edible composition according to 4, wherein the potassium salt of 6-methyl-1,2,3-oxathiazin-4(3H)-one 2,2-dioxide is present in the synergistic sweetening composition in an amount from about 0.001% to about 20%, by weight of the synergistic sweetening composition.

6. The sweetened edible composition according to 5, wherein the potassium salt of 6-methyl-1,2,3-oxathiazin-4(3H)-one 2,2-dioxide is present in the synergistic sweetening composition in an amount from about 0.01% to about 15%, by weight of the synergistic sweetening composition.

7. The sweetened edible composition according to 4, wherein the synergistic sweetening composition is present in the edible composition in an amount from about 1% to about 80%, by weight of the edible composition.

8. The sweetened edible composition according to 7, wherein the synergistic sweetening composition is present in the edible composition in an amount from about 5% to about 30%, by weight of the edible composition.

9. A sweetened chewing gum composition which comprises:

    (a) a gum base;
    (b) an effective amount of a synergistic sweetening composition which comprises xylitol and an effective amount of the potassium salt of 6-methyl-1,2,3-oxathiazin-4(3H)-one 2,2-dioxide; and
    (c) a flavoring agent.

10. The sweetened chewing gum composition according to 9, wherein the potassium salt of 6-methyl-1,2,3-oxathiazin-4(3H)-one 2,2-dioxide is present in the synergistic sweetening composition in an amount from about 0.001% to about 20%, by weight of the synergistic sweetening composition.

11. The sweetened chewing gum composition according to 10, wherein the potassium salt of 6-methyl-1,2,3-oxathiazin-4(3H)-one 2,2-dioxide is present in the synergistic sweetening composition in an amount from about 0.01% to about 15%, by weight of the synergistic sweetening composition.

12. The sweetened chewing gum composition according to 9, wherein the synergistic sweetening composition is present in an amount from about 1% to about 50%, by weight of the chewing gum composition.

13. The sweetened chewing gum composition according to 12, wherein the synergistic sweetening composition is present in an amount from about 5% to about 30%, by weight of the chewing gum composition.

14. The sweetened chewing gum composition according to 9, wherein the gum base is present in an amount up to about 55%, by weight of the chewing gum composition.

15. The sweetened chewing gum composition according to 9, wherein the gum base has an enhanced hydrophilic character and is present in an amount from about 50% to about 85%, by weight of the chewing gum composition.

16. A sweetened confectionery composition which comprises a confectionery bulking agent and an effective amount of a synergistic sweetening composition wherein the synergistic sweetening composition comprises xylitol and an effective amount of the potassium salt of 6-methyl-1,2,3-oxathiazin-4(3H)-one 2,2-dioxide.

17. The sweetened confectionery composition according to 16, wherein the potassium salt of 6-methyl-1,2,3-oxathiazin-4(3H)-one 2,2-dioxide is present in the synergistic sweetening composition in an amount from about 0.001% to about 20%, by weight of the synergistic sweetening composition.

18. The sweetened confectionery composition according to 16, wherein the synergistic sweetening composition is present in an amount from about 1% to about 30%, by weight of the confectionery composition.

19. A method for preparing a synergistic sweetening composition which comprises admixing xylitol and an effective amount of the potassium salt of 6-methyl-1,2,3-oxathiazin-4(3H)-one 2,2-dioxide.

20. A method for preparing a sweetened edible composition which comprises admixing an effective amount of a synergistic sweetening composition with a pharmaceutically acceptable carrier wherein the synergistic sweetening composition comprises xylitol and an effective amount of the potassium salt of 6-methyl-1,2,3-oxathiazin-4(3H)-one 2,2-dioxide.

21. A method for preparing a sweetened chewing gum composition which comprises

    (A) providing the following ingredients:

        (a) a gum base;

        (b) an effective amount of a synergistic sweetening composition which comprises xylitol and an effective amount of the potassium salt of 6-methyl-1,2,3-oxathiazin-4(3H)-one 2,2-dioxide; and

        (c) a flavoring agent;

    (B) melting the gum base;

    (C) admixing the synergistic sweetening composition with the melted gum base; and

    (D) forming the mixture from step (C) into suitable gum shapes.

22. A method for sweetening an edible composition which comprises adding to the edible composition an effective amount of a synergistic sweetening composition wherein the synergistic sweetening composition comprises xylitol and an effective amount of the potassium salt of 6-methyl-1,2,3-oxathiazin-4(3H)-one 2,2-dioxide.

The invention being thus described, it will be obvious that the same may be varied in many ways. Such variations are not to be regarded as a departure from the spirit and scope of the invention and all such modifications are intended to be included within the scope of the following claims.

## Claims

1. A synergistic sweetening composition which comprises xylitol and an effective amount of the potassium salt of 6-methyl-1,2,3-oxathiazin-4(3H)-one 2,2-dioxide.

2. The synergistic sweetening composition according to claim 1, wherein the potassium salt of 6-methyl-1,2,3-oxathiazin-4(3H)-one 2,2-dioxide is present in an amount from about 0.001% to about 20%, by weight of the synergistic sweetening composition, and preferably in an amount from about 0.01% to about 15%, by weight of the synergistic sweetening composition.

3. A sweetened edible composition which comprises a pharmaceutically acceptable carrier and an effective amount of a synergistic sweetening composition wherein the synergistic sweetening composition comprises xylitol and an effective amount of the potassium salt of 6-methyl-1,2,3-oxathiazin-4(3H)-one 2,2-dioxide as claimed in the claims 1 or 2.

4. The sweetened edible composition according to claim 3, wherein the synergistic sweetening composition is present in the edible composition in an amount from about 1% to about 80%, by weight of the edible composition, and preferably in an amount from about 5% to about 30%, by weight of the edible composition.

5. A sweetened chewing gum composition which comprises:

    (a) a gum base;

    (b) an effective amount of a synergistic sweetening composition which comprises xylitol and an effective amount of the potassium salt of 6-methyl-1,2,3-oxathiazin-4(3H)-one 2,2-dioxide as claimed in the claims 1 or 2; and

    (c) a flavoring agent.

6. The sweetened chewing gum composition according to claim 5, wherein the synergistic sweetening composition is present in an amount from about 1% to about 50%, by weight of the chewing gum composition and preferably in an amount from about 5% to about 30%, by weight of the chewing gum composition.

7. The sweetened chewing gum composition according to the claims 5 or 6, wherein the gum base is present in an amount up to about 55%, by weight of the chewing gum composition.

8. The sweetened chewing gum composition according to the claims 5 or 6, wherein the gum base has an enhanced hydrophilic character and is present in an amount from about 50% to about 85%, by weight of the chewing gum composition.

9. A sweetened confectionery composition which comprises a confectionery bulking agent and an effective amount of a synergistic sweetening composition wherein the synergistic sweetening composition comprises xylitol and an effective amount of the potassium salt of 6-methyl-1,2,3-oxathiazin-4(3H)-one 2,2-dioxide as claimed in the claims 1 or 2.

10. The sweetened confectionery composition according to claim 9, wherein the synergistic sweetening composition is present in an amount from about 1% to about 30%, by weight of the confectionery composition.

11. A method for preparing a synergistic sweetening composition which comprises admixing xylitol and an effective amount of the potassium salt of 6-methyl-1,2,3-oxathiazin-4(3H)-one 2,2-dioxide.

12. A method for preparing a sweetened edible composition which comprises admixing an effective amount of a synergistic sweetening composition with a pharmaceutically acceptable carrier wherein the synergistic sweetening composition comprises xylitol and an effective amount of the potassium salt of 6-methyl-1,2,3-oxathiazin-4(3H)-one 2,2-dioxide as claimed in the claims 1 or 2.

13. A method for preparing a sweetened chewing gum composition which comprises
(A) providing the following ingredients:
(a) a gum base;
(b) an effective amount of a synergistic sweetening composition which comprises xylitol and an effective amount of the potassium salt of 6-methyl-1,2,3-oxathiazin-4(3H)-one 2,2-dioxide as claimed in the claims 1 or 2; and
(c) a flavoring agent;
(B) melting the gum base;
(C) admixing the synergistic sweetening composition with the melted gum base; and
(D) forming the mixture from step (C) into suitable gum shapes.

14. A method for sweetening an edible composition which comprises adding to the edible composition an effective amount of a synergistic sweetening composition wherein the synergistic sweetening composition comprises xylitol and an effective amount of the potassium salt of 6-methyl-1,2,3-oxathiazin-4(3H)-one 2,2-dioxide as claimed in the claims 1 or 2.

FIG-1 SWEETENER SYNERGY
SPEARMINT ANHYDROUS GUMS

- ● EXAMPLE 16
- + EXAMPLE 17
- ✳ EXAMPLE 18
- □ EXAMPLE 19

SWEETNESS
INTENSITY

TIME IN MIN.

EP 0 459 952 A2

FIG-2 SWEETENER SYNERGY
SPEARMINT ANHYDROUS GUMS

EXAMPLE 20
EXAMPLE 21
EXAMPLE 22
EXAMPLE 23

SWEETNESS
INTENSITY

TIME IN MIN.

EP 0 459 952 A2

FIG-3 SYNERGY MINUS BULK SWEETNESS

EP 0 459 952 A2